# EUROPÄISCHE PATENTSCHRIFT

(11) **EP 3 232 188 B1**
(45) Veröffentlichungstag und Bekanntmachung des Hinweises auf die Patenterteilung: **17.02.2021**
(21) Anmeldenummer: 17166618.3
(22) Anmeldetag: 13.04.2017
(51) Int. Cl.: G01N 27/42

(54) **COULOMETRISCHER FEUCHTESENSOR MIT GELFÖRMIGEM ELEKTROLYT UND HERSTELLUNGSVERFAHREN FÜR EINEN COULOMETRISCHEN FEUCHTESENSOR MIT GELFÖRMIGEM ELEKTROLYT**
COULOMETRIC HUMIDITY SENSOR COMPRISING A GEL-FORM ELECTROLYTE AND METHOD OF MANUFACTURING THE SAME FOR A COULOMETRIC HUMIDITY SENSOR COMPRISING A GEL-FORM ELECTROLYTE
CAPTEUR D'HUMIDITÉ COULOMÉTRIQUE COMPRENANT UN ÉLECTROLYTE GÉLIFIÉ ET PROCÉDÉ DE FABRICATION D'UN TEL CAPTEUR COMPRENANT UN ÉLECTROLYTE GÉLIFIÉ

(30) Priorität: 15.04.2016 DE 102016206445
(43) Veröffentlichungstag der Anmeldung: 18.10.2017
(73) Patentinhaber: Deutsches Zentrum für Luft- und Raumfahrt e.V., 51147 Köln (DE)
(72) Erfinder: Wolter, David, 10318 Berlin (DE); Lorek, Andreas, 14776 Brandenburg (DE)
(74) Vertreter: Patentanwälte Bressel und Partner mbB

(56) Entgegenhaltungen:
- EP-A1- 2 264 445
- DE-A1- 10 208 648
- US-A- 4 621 249
- US-A- 4 800 000

## Beschreibung

Die Erfindung betrifft einen Coulometrischen Feuchtesensor und ein Herstellungsverfahren für einen Coulometrischen Feuchtesensor.

Die Feuchtigkeit in Gasen ist ein wichtiger Analyseparameter in der Prozessindustrie, unter anderem bei Gasherstellern, bei Gasversorgern und in der Halbleiterindustrie. Bereits geringe Mengen an Feuchtigkeit können beispielsweise Herstellungsverfahren in der Halbleiterindustrie negativ beeinflussen. Darüber hinaus ist die Feuchtigkeit bei der extraterrestrischen Forschung, insbesondere bei der Planetenforschung, von großem Interesse. Daher besteht ein großer Bedarf, die Spurenfeuchte in Gasen exakt bestimmen zu können.

Für präzise Feuchtemessungen im Spurenfeuchtebereich, wird unter anderen das coulometrische Verfahren eingesetzt. Bei diesem Verfahren werden Wassermoleküle an einem selbst im Wesentlichen nicht leitfähigen hygroskopischen Material absorbiert. Über zwei getrennt voneinander ausgebildete Elektroden, die in Kontakt mit dem hygroskopischen Material angeordnet sind, wird eine Spannung angelegt. Hierdurch wird eine elektrolytische Dissoziation der Wassermoleküle in Wasserstoff und Sauerstoff ausgelöst. Aufgrund der Dissoziation und der dabei freiwerdenden 2 Elektronen pro dissoziertem Molekül kommt es zu einem Stromfluss, der proportional zu der Anzahl der dissoziierten Moleküle ist. Über eine Strommessung wird die Anzahl der bei der Dissoziation erzeugten Ladungsträger gemessen. Der gemessene Strom ist somit proportional zu der Anzahl der absorbierten und dissoziierten Moleküle.

Das coulometrische Messprinzip wurde von Keidel entwickelt und ist in dem Artikel "Determination of Water by Direct Amperometric Measurement" in Journal Anal. Chem. 31 (1959), S. 2043-2048 beschrieben. Das dort beschriebene Messsystem besteht aus einem Sensor, der sich in einer Messzelle befindet, einem Massenflussregler, einer Gleichspannungsquelle und einem Strommessgerät. Durch den Massenflussregler wird ein definierter Volumenstrom über den Sensor geleitet. Der Sensor besteht aus einem Substrat, z.B. Glas oder Keramik, auf dem sich zwei Elektroden, im Allgemeinen aus Platin, befinden. Zwischen den Elektroden und in Kontakt mit diesen ist ein hygroskopisches Material angeordnet, welches vorzugsweise Phosphorpentoxid (P₂O₅) ist. Dieses absorbiert Wasser. Durch eine an den Elektroden anliegende Gleichspannung wird das absorbierte Wasser elektrolysiert und es entsteht ein dem absorbierten Wasser proportionaler Strom. Ein solches Messsystem wird häufig im Bypass betrieben, wie dies beispielsweise von R. Wernecke "Industrielle Feuchtemessung - Grundlagen, Messmethoden, technische Anwendungen" Weinheim: Wiley-VCH GmbH & Co. KGaA, 2003.-567 S. - ISBN 3-527-30285-9 auf Seite 118 und Seiten 307 und folgende beschrieben ist. Alternativ wird das über den Sensor geführte Messgas gegen die Atmosphäre abgeblasen. Die Dokumente EP 2 264 445 A1 und US 4,621,249 offenbaren einen coulometrischen Feuchtsensor.

Aus der DE 30 43 341 A1 ist ein Verfahren zur Herstellung eines Feuchtedetektors bekannt, bestehend aus einem elektrisch isolierenden Substrat, auf dem ein Elektrodensystem angebracht ist. Das Elektrodensystem umfasst ein Edelmetallelektrodenpaar, das durch eine elektrisch leitende feuchtigkeitsempfindliche auf dem Substrat vorhandene Schicht elektrisch miteinander verbunden ist.

Der Nachteil der vorgenannten Feuchtesensoren und Verfahren ist, dass häufig keine homogene Beschichtung der Oberfläche mit dem hygroskopischen Material möglich ist, da die hohe Oberflächenspannung des hygroskopischen Materials zur Tropfenbildung führt. Die Tropfenbildung führt dazu, dass Teile des Sensors nicht benetzt sind und/oder die benetzten Teile unterschiedliche Schichtdicken aufweisen. Darüber hinaus können derartige Sensoren nur in der räumlichen Ausrichtung betrieben werden, in der sie kalibriert wurden, da ansonsten das hygroskopische Material bei Lageänderung auf der Oberfläche des Sensors wandert und es zu einer Kennlinienverschiebung kommt oder es im ungünstigsten Fall sogar von der sensitiven Fläche des Feuchtesensors abfließt. Dadurch wird auch ein Transport des Sensors deutlich erschwert oder sogar unmöglich gemacht. Zur Vermeidung eines Abfließens wurden bisher Randbereiche des Sensors mit Barrieren versehen.

Der Erfindung liegt das technische Problem zu Grunde, einen Feuchtesensor und ein Herstellungsverfahren für einen Feuchtesensor zu schaffen, bei denen die Benetzung der Oberfläche des Feuchtesensors verbessert ist.

Die technische Aufgabe wird erfindungsgemäß durch einen Feuchtesensor mit den Merkmalen des Patentanspruchs 1 und ein Herstellungsverfahren mit den Merkmalen des Patentanspruchs 13 gelöst. Vorteilhafte Ausgestaltungen der Erfindung ergeben sich aus den Unteransprüchen.

Dazu wird ein Feuchtesensor geschaffen, geeignet zum Messen einer Luftfeuchte, umfassend mindestens ein nichtleitendes flächig ausgebildetes Substrat, mindestens zwei an einer flächigen Seite des Substrats angeordnete voneinander beabstandete Elektroden, ein flächig auf der flächigen Seite des nichtleitenden Substrats und den Elektroden aufgetragenes die Elektroden verbindendes hygroskopisches Material, wobei eine Viskosität des hygroskopischen Materials durch mindestens einen beigemischten Feststoff erhöht ist.

Ferner wird ein Verfahren zum Herstellen eines Feuchtesensors zur Verfügung gestellt, umfassend die folgenden Schritte: Bereitstellen eines nichtleitenden flächig ausgebildeten Substrats, Aufbringen von zwei voneinander beabstandeten Elektroden auf einer flächigen Seite des Substrats, flächiges Aufbringen eines hygroskopischen Materials auf die flächige Seite des nichtleitenden Substrats und die Elektroden, wobei dem hygroskopischen Material mindestens ein Feststoff zum Ändern einer Viskosität des hygroskopischen Materials beigemischt wird.

Die Grundidee der Erfindung ist, dem hygroskopischen Material einen Feststoff beizumischen. Dabei handelt es sich vorzugsweise um kleine Feststoffpartikel, an denen das hygroskopische Material physisorbiert wird. Durch die Physisorption verändert sich die Viskosität des hygroskopischen Materials, ohne dass sich dessen Reaktionsfähigkeit verändert. Auf diese Weise wird die Oberflächenspannung des hygroskopischen Materials verändert und die Benetzung der Substrat- und Elektrodenoberfläche mit dem Material erfolgt homogener. Durch eine homogenere Benetzung sind Messungen der Luftfeuchte mit dem erfindungsgemäßen Feuchtesensor zuverlässiger, vergleichbarer und reproduzierbarer. Durch die erhöhte Viskosität kann das hygroskopische Material nicht mehr so leicht abfließen, wodurch sich die Transportfähigkeit eines fertig hergestellten erfindungsgemäßen Feuchtesensors deutlich verbessert. Darüber hinaus vereinfacht sich die Herstellung des Feuchtesensors, da Barrieren zum Verhindern eines Abfließens des hygroskopischen Materials an den Randbereichen nicht mehr notwendig sind.

Als eine geeignete Klasse von Feststoffen haben sich anorganische Oxide, insbesondere Metalloxide erwiesen. Hier eignen sich insbesondere säurebeständige Oxide. Geeignete Metalloxide sind beispielsweise Oxide der Metalle Titan, Wolfram, Silizium, Yttrium, um einige vorteilhafte Feststoffe zu nennen.

Ein besonders homogen ausgebildetes hygroskopisches Material kann erlangt werden, wenn die beigemischten Feststoffe möglichst kleine Abmessungen aufweisen. In einer vorteilhaften Ausführungsform ist deshalb vorgesehen, dass der mindestens eine beigemischte Feststoff Nanopartikel mit Abmessungen im Nanometerbereich aufweist.

Dabei ist in einer besonders vorteilhaften Ausführungsform vorgesehen, dass die Nanopartikel SiO₂-Nanopartikel sind. Dies hat den Vorteil, dass die Nanopartikel chemisch widerstandfähig, ungiftig und umweltverträglich sind.

Dabei ist es bei der Herstellung eines Feuchtesensors vorteilhaft, wenn das hygroskopische Material gelartige Eigenschaften aufweist. Eine besonders vorteilhafte Ausführungsform sieht deshalb vor, dass eine Stoffmenge des mindestens einen beigemischten Feststoffs derart bemessen ist, dass die Viskosität des hygroskopischen Materials Gelcharakter aufweist. Dabei bezeichnet ein Gel ein viskoelastisches Fluid mit Gelcharakter. Zum Erlangen des Gelcharakters muss im komplexen Schubmodul des Fluids der Betrag des Speichermoduls größer sein als der Betrag des Verlustmoduls. Der Speichermodul steht dabei für den elastischen Anteil des komplexen Schubmoduls, wobei der Speichermodul proportional zum Anteil der Deformationsenergie ist, die in dem Material gespeichert wird und nach Entlastung wieder aus dem Material gewonnen werden kann. Der Verlustmodul beschreibt hingegen den viskosen Anteil des komplexen Schubmoduls und entspricht dem Verlustanteil der Energie, welche durch innere Reibung in Wärme umgewandelt wird. Weist das hygroskopische Material Gelcharakter auf, lässt es sich leicht verarbeiten und auf das Substrat auftragen, bleibt jedoch nach Auftragen weitgehend formbeständig auf der Oberfläche des Feuchtesensors erhalten. Dies ermöglicht eine Transportfähigkeit des Feuchtesensors. Darüber hinaus wird es möglich, den Feuchtesensor lageunabhängig zu betreiben.

Das Auftragen des hygroskopischen Materials lässt sich besonders gut durchführen, wenn das hygroskopische Material während des Auftragens eine geringere Viskosität aufweist als nach Abschluss des Herstellungsverfahrens. Dies lässt sich über eine geschickte Auswahl des beigemischten Feststoffes realisieren. In einer weiteren vorteilhaften Ausführungsform ist dazu vorgesehen, dass der mindestens eine beigemischte Feststoff derart ausgebildet oder ausgewählt ist, dass das hygroskopische Material thixotrope Eigenschaften aufweist. Vor dem Aufbringen auf das Substrat und die Elektroden lässt sich die Viskosität des hygroskopischen Materials mit thixotropen Eigenschaften dann beispielsweise durch mechanische Beanspruchung verringern. Nach dem Aufbringen erhöht sich dann die Viskosität des hygroskopischen Materials wieder von selbst, so dass das aufgebrachte hygroskopische Material homogen und transportfähig ist.

Die beigemischten Feststoffe, die eine Viskositätsänderung des hygroskopischen Materials bewirken, weisen einen Anteil von kleiner 20 Gewichtsprozent (gew.-%) in dem hygroskopischen Material des betriebsfertigen Sensors auf. Bevorzugt liegt dieser Anteil der die Viskosität ändernden Feststoffe bei 15 gew.-% ± 1 gew.-%.

Natürlich können dem hygroskopischen Material weitere Feststoffe beigemischt werden. Diese können dabei derart ausgewählt sein, dass die elektrolytischen Eigenschaften des hygroskopischen Materials verändert sind oder werden. In einer weiteren vorteilhaften Ausführungsform ist deshalb vorgesehen, dass einer der beigemischten Feststoffe ein weiteres Oxid aufweist.

In einer vorteilhaften Ausführungsform ist dabei insbesondere vorgesehen, dass das weitere Oxid ein Zinnoxid ist. Es hat sich gezeigt, dass optimale Ergebnisse bei einer Verwendung von Sn(IV)O als weiteres Oxid erlangt werden. Vergleichbare Ergebnisse wurden aber auch mit Oxiden wie beispielsweise Zr(VI)O oder Ti(IV)O erreicht.

Dieses weitere Oxid, ändert die elektrischen Eigenschaften, jedoch nicht oder nur unwesentlich die Viskosität bzw. die vorzugsweise thixotrope Eigenschaft des hygroskopischen Materials.

Einige Ausführungsformen sehen vor, das zusätzlich zu den vorzugsweise 15 gew.-% des zur Gelbildung zugefügten Oxids, beispielsweise in Form von SiO₂-Nanopartikeln, ein weiteres die elektrischen Eigenschaften verbesserndes Oxid, beispielsweise Sn(IV)O, mit bis zu einem Anteil von weiteren 15 gew.-% dem hygroskopischen Material zugefügt wird. Die thixotrope Eigenschaft des hygroskopischen Materials wird hierdurch nicht gegenüber Ausführungsformen verändert, die nur das Oxid zur Gelbildung aufweisen, also beispielsweise 15 gew.-% SiO₂-Nanopartikeln umfassen. Es wird eine Ansprechgeschwindigkeit des Sensors vergrößert, das heißt, die Zeitdauer verringert, die der Sensor benötigt, um einzuschwingen und/oder auf Änderungen der Spurenfeuchte mit einem erfassbaren Unterschied zu reagieren.

Generell lässt sich das Messsignal vergrößern, wenn eine möglichst große Fläche zum Messen der Luftfeuchte verwendet wird. Deshalb ist in einer weiteren Ausführungsform vorgesehen, dass die zwei voneinander beabstandeten Elektroden jeweils kammartig ausgebildet sind, wobei die zwei kammartigen voneinander beabstandeten Elektroden derart angeordnet und gegeneinander verschoben sind, dass einzelne Zinken beider Elektroden jeweils komplementär ineinander greifen.

Zur Erlangung einer vorgegebenen Schichtdicke des hygroskopischen Materials ist es wichtig, dass die Schichtdicke sehr genau eingestellt und reproduziert werden kann. Dies lässt sich mit Hilfe eines speziellen Pinsels erreichen. In einer besonders vorteilhaften Ausführungsform ist deshalb vorgesehen, dass das hygroskopische Material mit dem mindestens einen beigemischten Feststoff mit Hilfe eines speziellen Pinsels auf das Substrat und die Elektroden flächig aufgebracht wird. Dies ermöglicht ein einfaches und uniformes Aufbringen des hygroskopischen Materials zusammen mit den beigemischten Feststoffen. Durch das Aufbringen des hygroskopischen Materials in einer vorgegebenen Schichtdicke kann eine verbesserte Kennlinienübereinstimmung bzw. Vergleichbarkeit und Reproduzierbarkeit mehrerer Feuchtesensoren untereinander realisiert werden. Bei dem speziellen Pinsel handelt es sich beispielsweise um einen Silikonpinsel mit keilförmiger Spitze. In der Form ist der spezielle Pinsel vergleichbar mit der Spitze eines Schraubendrehers für Schlitzschrauben. Die Spitze des Pinsels ist elastisch ausgebildet und ermöglicht dadurch ein homogenes und für den Sensor schonendes Auftragen des Gels auf den Sensor.

In einer Ausführungsform ist vorgesehen, dass das hygroskopische Material ein hydrophiler Elektrolyt ist.

In einer Ausführungsform ist vorgesehen, dass der hydrophile Elektrolyt eine Säure aufweist.

Insbesondere ist bei einer Ausführungsform vorgesehen, dass die Säure im hydrophilen Elektrolyt Phosphorsäure ist.

In einer weiteren Ausführungsform ist vorgesehen, dass das Substrat aus Al₂O₃ besteht.

Als vorteilhaft für eine Langzeitstabilität hat es sich erwiesen, den Feuchtesensor mit wechselnder Polarität der Spannung zu betreiben. Beispielsweise kann eine Änderung der Spannungsrichtung alle 10 Sekunden vorgenommen werden. Abweichende Zeitdauern können selbstverständlich gewählt werden. Wichtig ist, dass ein reproduzierbares Messergebnis in der Zeitspanne zwischen den Änderungen der Polarität erfasst werden kann. Ein Betrieb mit sinusförmiger Wechselspannung von 50 Hz oder mehr gestattet dieses nicht.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform eines erfindungsgemäßen Feuchtesensors in Draufsicht auf die flächige Oberseite;
- Fig. 2: eine schematische Schnittdarstellung durch die Ausführungsform des in Fig. 1 gezeigten Feuchtesensors;
- Fig. 3: Kennlinien von Feuchtesensoren mit einem herkömmlichen hygroskopischen Material entsprechend des Stands der Technik;
- Fig. 4: Kennlinien von Feuchtesensoren mit einem erfindungsgemäßen hygroskopischen Material und beigemischten SiO₂-Nanopartikeln;
- Fig. 5: Kennlinien zur Reaktionsgeschwindigkeit der Feuchtesensoren aus Fig. 3 mit dem herkömmlichen hygroskopischen Material gemäß dem Stand der Technik;
- Fig. 6: Kennlinien zur Reaktionsgeschwindigkeit der Feuchtesensoren aus Fig. 4 mit dem erfindungsgemäßen hygroskopischen Material und beigemischten SiO₂-Nanopartikeln;
- Fig. 7: ein schematisches Ablaufdiagramm des Verfahrens zur Herstellung eines erfindungsgemäßen Feuchtesensors;
- Fig. 8: eine schematische Darstellung einer Ausführungsform eines Feuchtesensors in perspektivischer Darstellung auf die flächige Oberseite;
- Fig. 9: eine schematische Darstellung einer Ausführungsform eines Feuchtesensors in Draufsicht auf die flächige Oberseite;
- Fig. 10: eine schematische Darstellung einer Ausführungsform eines Feuchtesensors in Draufsicht auf die flächige Oberseite:
- Fig. 11: einen Ausschnitt eines schematischen Höhenprofils eines Feuchtesensors.

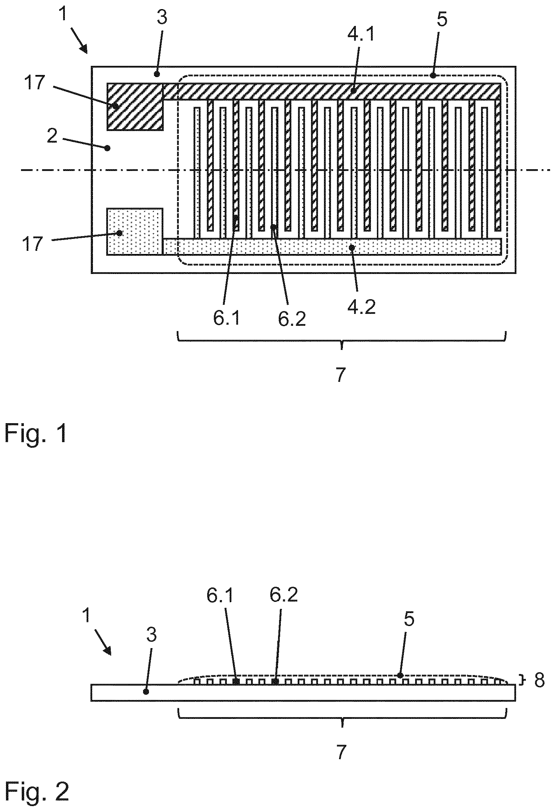

Die Fig. 1 und Fig. 2 zeigen eine schematische Darstellung einer Ausführungsform eines Feuchtesensors 1. Dabei ist eine Draufsicht (Fig. 1) auf eine flächig ausgebildete Oberfläche 2 des Feuchtsensors 1 und ein Schnitt (Fig. 2) durch den Feuchtesensor 1 gezeigt. Der Feuchtesensor 1 umfasst ein nichtleitendes Substrat 3 aus Al₂O₃, Elektroden 4.1, 4.2 und ein hygroskopisches Material 5. Als nicht leitendes Substrat eignen sich prinzipiell auch Glas und SiO.

Die Elektroden 4.1, 4.2 sind kammartig und voneinander beabstandet ausgebildet, wobei die Elektroden 4.1, 4.2 derart angeordnet und gegeneinander verschoben sind, dass einzelne Zinken 6.1, 6.2 beider Elektroden 4.1, 4.2 jeweils komplementär ineinander greifen. Die Elektroden 4.1, 4.2 bestehen dabei aus Platin oder einem anderen Edelmetall, wie zum Beispiel Gold. Das leitende Elektrodenmaterial der Elektroden 4.1, 4.2 kann dabei aufgedampft, aufgesputtert oder anders aufgebracht worden sein und weist eine Schichtdicke von einigen 5-10 µm Dicke auf. Innerhalb eines Messbereichs 7 des Feuchtesensors 1 ist das hygroskopische Material 5 zusammen mit beigemischten Nanopartikeln aufgebracht. Das hygroskopische Material 5 ist dabei vorzugsweise als homogene Schicht aufgebracht. Die Stoffmenge der Nanopartikel ist dabei derart gewählt, dass die Viskosität in Ruhe gelartig ist, das heißt dass das hygroskopische Material Gelcharakter aufweist. Das hygroskopische Material 5 besteht hier beispielsweise aus 85%iger Phosphorsäure und beigemischten SiO₂-Nanopartikeln. Durch den Gelcharakter ist das hygroskopische Material 5 uniform und homogen aufgetragen, so dass die Schichtdicke 8 im Messbereich 7 überall weitgehend gleich ist. Darüber hinaus bleibt das aufgetragene hygroskopische Material 5 formbeständig, so dass der Feuchtesensor 1 transportiert und lageunabhängig betrieben werden kann.

Zur Erleichterung einer Kontaktierung sind die Elektroden 4.1, 4.2 an den Enden mit Goldkontakten 17 versehen, an denen der Feuchtesensor 1, beispielsweise mit einer Messelektronik, kontaktiert wird.

Der Feuchtesensor 1 wird analog zu herkömmlichen Feuchtesensoren im Stand der Technik betrieben. Zum Messen wird eine Gleich- oder Wechselspannung an die Elektroden 4.1, 4.2 angelegt und ein Strom gemessen. Der gemessene Strom ist ein Maß für eine vorhandene Luftfeuchte.

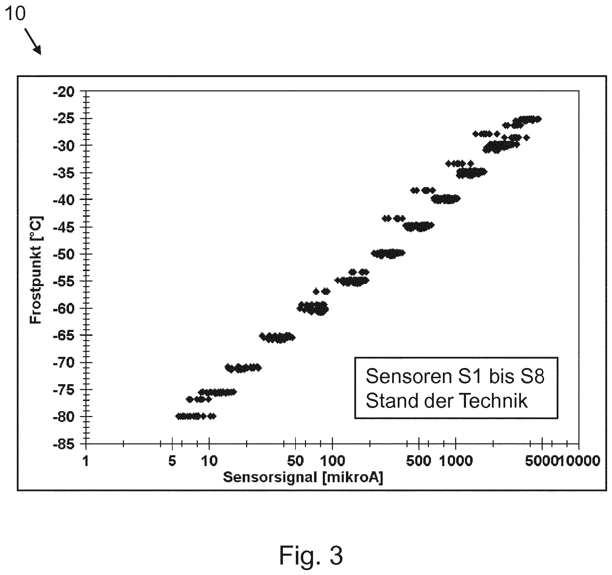

Fig. 3 zeigt eine Kennlinie 10 eines Feuchtesensors mit einem herkömmlichen hygroskopischen Material aus dem Stand der Technik. Dabei ist auf der Abszisse das Sensorsignal in Form eines gemessenen Stromes und auf der Ordinate der Tau-/Frostpunkt gezeigt. Bei der Tau-/Frostpunkttemperatur beträgt die relative Luftfeuchte der Luft 100 %. Der Tau-/Frostpunkt ist somit eine Größe, welche äquivalent zu einer absoluten Luftfeuchte bei einer gegebenen Temperatur ist. Dabei gilt allgemein, dass sich der Tau-/Frostpunkt erhöht, wenn die Luftfeuchte (Partialdruck von Wasserdampf) ansteigt. So entspricht ein Tau-/Frostpunkt von 9,3°C bei einer Lufttemperatur von 20°C beispielsweise einer relativen Luftfeuchte von 50 %. Erhöht sich der Tau-/Frostpunkt dann beispielsweise auf 16,4°C, so entspricht dies einer relativen Luftfeuchte von 80 %. Beträgt hingegen die relative Luftfeuchte 100 %, so ist der Tau-/Frostpunkt gleich der Lufttemperatur, liegt im Beispiel hier also bei 20°C.

In Fig. 3 sind Messergebnisse von acht Feuchtsensoren S1 bis S8 gezeigt, wobei die Feuchtesensoren S1 bis S8 jeweils mit 85%iger Phosphorsäure als hygroskopisches Material beschichtet wurden. Gemessen wurde unter folgenden Bedingungen: Raumtemperatur, Normaldruck, 20 Nl/h (Normliter pro Stunde) Gasstrom und einer Spitze-zu-Spitze-Messwechselspannung von 36 V bei eine Frequenz von 0,05 Hz.

Deutlich in der Fig. 3 zu erkennen ist eine breite Streuung der Messergebnisse der verschiedenen Feuchtesensoren S1 bis S8. Eine Vergleichbarkeit der Kennlinien ist somit bei den herkömmlichen Feuchtesensoren im Stand der Technik nicht gegeben.

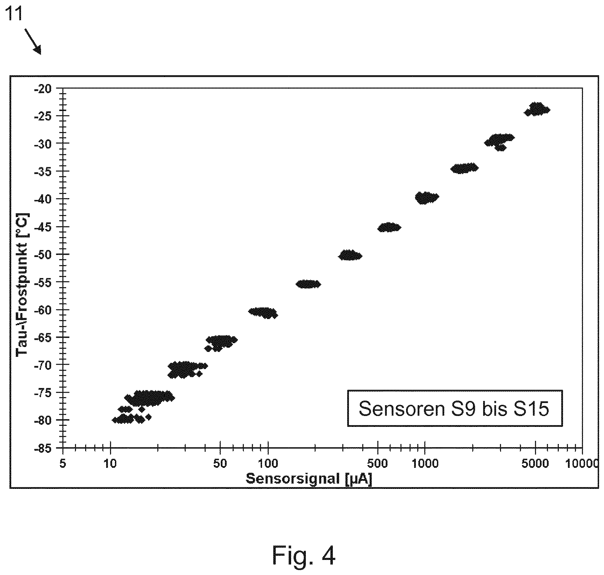

In Fig. 4 sind Kennlinien 11 von Feuchtesensoren mit einer Ausführungsform des hygroskopischen Materials, bestehend aus 85%iger Phosphorsäure (7,5 ml) in Wasser (6 ml), beigemischten SiO₂-Nanopartikeln (2 g) und beigemischten Sn(IV)O-Nanopartikeln (2 g), gezeigt. Das hygroskopische Material wurde mit einem speziellen Pinsel auf ein Substrat und zwei Elektroden gestrichen. Die Messbedingungen sind die gleichen wie für die herkömmlichen Feuchtesensoren: Raumtemperatur, Normaldruck, 20 Nl/h (Normliter pro Stunde) Gasstrom und einer Messwechselspannung von 36 V bei eine Frequenz von 0,05 Hz.

Fig. 4 zeigt Messergebnisse von sechs erfindungsgemäßen Feuchtesensoren S9 bis S15. Dabei ist deutlich zu erkennen, dass die Streuung der Messergebnisse der einzelnen Feuchtesensoren S9 bis S15 im Vergleich zu den in der Fig. 3 für die herkömmlichen Feuchtesensoren gezeigten Messergebnissen abgenommen hat. Die Kennlinien haben somit durch das erfindungsgemäße hygroskopische Material eine deutlich verbesserte Reproduzierbarkeit und Vergleichbarkeit untereinander erlangt.

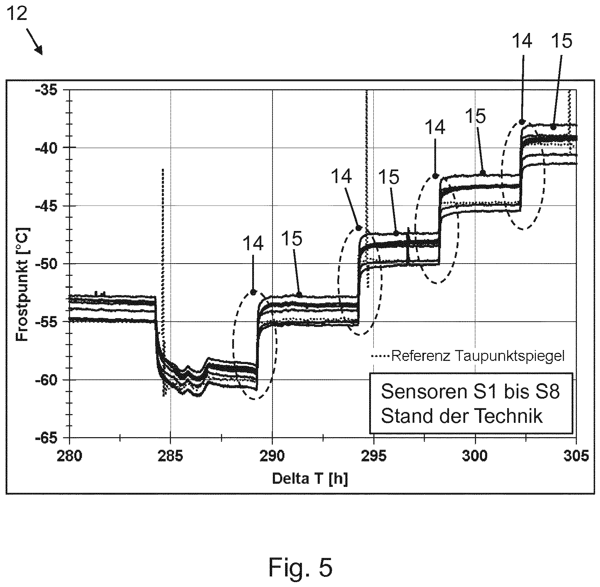

Fig. 5 zeigt Kennlinien 12 zur Reaktionsgeschwindigkeit der herkömmlichen Feuchtesensoren. Gezeigt ist der aus den Messungen bestimmte Tau-/Frostpunkt als Funktion der Zeit. Der Tau-/Frostpunkt wurde dabei jeweils in Abständen von 4 bis 5 Stunden verändert. Deutlich zu erkennen ist das Einschwingen 14 der herkömmlichen Feuchtesensoren S1 bis S8. Die Feuchtesensoren S1 bis S8 benötigen bis zum finalen Erreichen ihrer Endmesswerte 15 jeweils ca. 20 bis 30 Minuten. Wie in Fig. 3 ist hier ebenfalls wieder deutlich die Streuung der Messwerte der einzelnen herkömmlichen Feuchtesensoren S1 bis S8 zu erkennen. Dabei streuen sowohl die Endmesswerte 15 als auch das beobachtete Einschwingen 14.

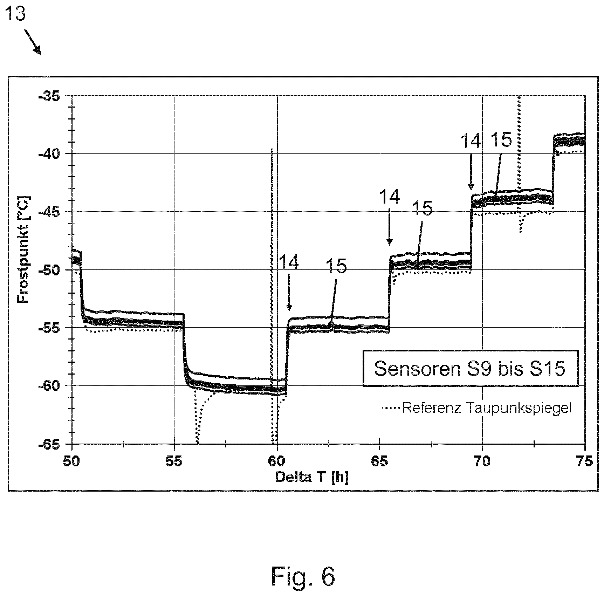

Zum Vergleich zeigt Fig. 6 Kennlinien 13 der Ausführungsform der Feuchtesensoren S9 bis S15. Hier wurde die Luftfeuchte jeweils in Abständen von 3 bis 5 Stunden verändert. Im Vergleich zu den Kennlinien 12 der herkömmlichen Feuchtesensoren in Fig. 5 lässt sich beobachten, dass sich das Einschwingen 14 der Feuchtesensoren S9 bis S15 nach einer Änderung der Luftfeuchte deutlich verkürzt hat. So erreichen die erfindungsgemäßen Feuchtesensoren S9 bis S15 jeweilige Endmesswerte 15 bereits nach weniger als 5 Minuten nach der Änderung der Luftfeuchte. Die Reaktionsgeschwindigkeit der erfindungsgemäßen Feuchtesensoren S9 bis S15 ist gegenüber den herkömmlichen Sensoren S1 bis S8 um fast eine Größenordnung verbessert. Darüber hinaus erkennt man auch hier die Übereinstimmung der Endmesswerte 15 der einzelnen erfindungsgemäßen Feuchtesensoren S9 bis S15. Die Messerergebnisse sind durch das erfindungsgemäße hygroskopische Material somit besser vergleichbar und besser reproduzierbar geworden, sowohl was die Endmesswerte 15 als auch was das Einschwingen 14 angeht.

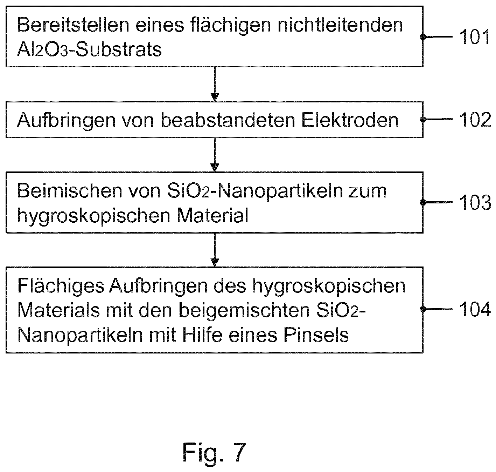

Fig. 7 zeigt ein schematisches Ablaufdiagramm eines Verfahrens zum Herstellen eines erfindungsgemäßen Feuchtesensors. Im ersten Verfahrensschritt 101 wird ein flächig ausgebildetes nichtleitendes Substrat aus Al₂O₃ bereitgestellt. Die Abmessungen des Substrats betragen beispielsweise 3 x 1 cm². Auf eine Oberseite des Substrats werden im nächsten Verfahrensschritt 102 zwei voneinander beabstandete Platin-Elektroden aufgebracht. Das Aufbringen kann beispielsweise durch Bedampfen mit oder Aufsputtern von Platin erfolgen. Prinzipiell sind aber auch andere Materialien für die Elektroden, beispielsweise Gold, Rhodium oder Iridium, sowie andere Methoden zum Aufbringen möglich. Die aufgebrachten Elektroden sind dabei jeweils kammartig ausgebildet, wobei die zwei kammartigen voneinander beabstandeten Elektroden derart angeordnet und gegeneinander verschoben sind, dass einzelne Zinken beider Elektroden jeweils komplementär ineinander greifen. Eine Länge der Zinken beträgt beispielsweise 0,8 cm und eine Breite und Abstände zwischen den Zinken beispielsweise jeweils 200 µm. Eine derartige Anordnung der Elektroden kann beispielsweise durch eine Verwendung einer Schattenmaske während des Bedampfens oder Aufsputterns realisiert werden. Im nächsten Verfahrensschritt 103 werden einem hygroskopischen Material, beispielsweise 85%iger Phosphorsäure in Wasser, SiO₂-Nanopartikel beigemischt. Dabei wird die beigemischte Stoffmenge der SiO₂-Nanopartikel derart ausgewählt oder eingestellt, dass das hygroskopische Material Gelcharakter bekommt. Im letzten Verfahrensschritt 104 wird das gelartige mit den SiO₂-Nanopartikeln versehene hygroskopische Material mit Hilfe eines speziellen Pinsels auf einen Messbereich des Substrats und der Elektroden aufgebracht.

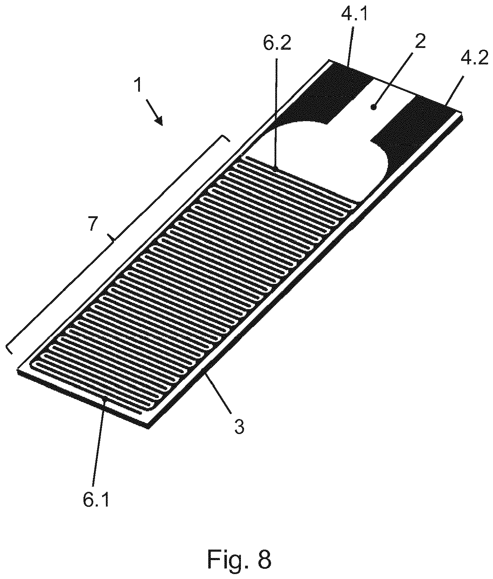

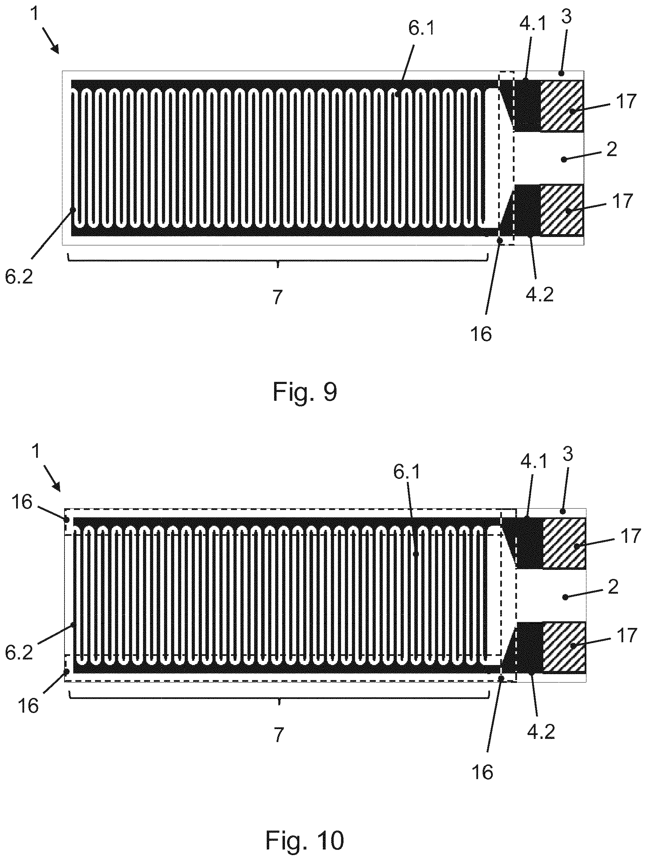

Die Figuren 8 bis 10 zeigen schematisch weitere Ausführungsformen des Feuchtesensors 1. Gleiche Bezugszeichen bezeichnen dabei die gleichen Merkmale und Begriffe wie in der Ausführungsform, welche in Fig. 1 gezeigt ist. Das hygroskopische Material ist in den Darstellungen nicht gezeigt. Im Gegensatz zu den Ausführungsformen, welche in den Figuren 1 und 8 gezeigt sind, weisen die Ausführungsformen, welche in den Figuren 9 bis 10 gezeigt sind, in verschiedenen Bereichen jeweils zusätzlich eine Barriere 16 auf. Obwohl die Barriere 16 auf Grund des verbesserten hygroskopischen Materials nicht mehr notwendig ist, kann eine solche Barriere 16 trotzdem weitere Vorteile aufweisen.

Die Barriere 16 zwischen dem Messbereich 7 und den Goldkontakten 17 (Figuren 9 und 10) dient beispielsweise dazu, die Goldkontakte 17 vor einem Kontakt mit dem hygroskopischen Material zu schützen. Die Barriere 16 an den Randbereichen des Messbereichs 7 (Fig. 10) verhindert beispielsweise, dass das hygroskopische Material in diese Randbereiche gelangt und dort in den Bereichen, wo die Zinken 6.1, 6.2 jeweils enden, zu Nichtlinearitäten bei der Strommessung führen, welche die gesamte Messung beeinflussen könnten. Als Material für die Barrieren 16 kann beispielsweise Glas verwendet werden.

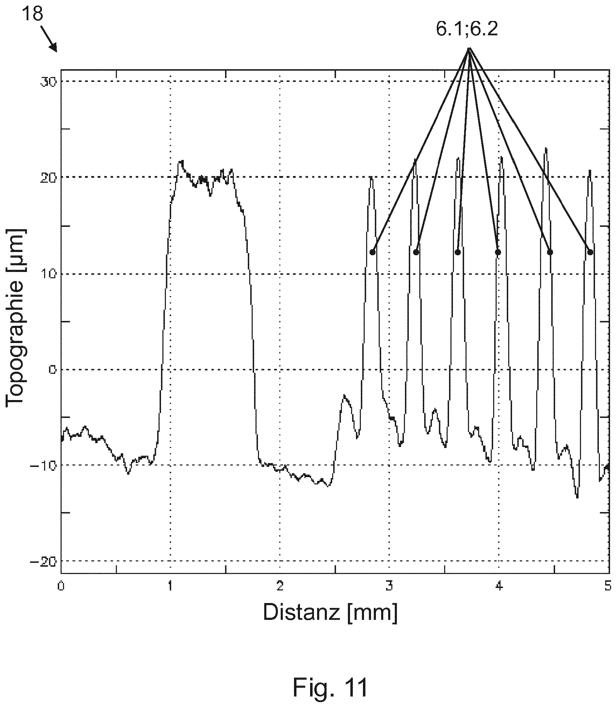

In Fig. 11 ist ein Ausschnitt aus einem schematischen Höhenprofil 18 eines Feuchtesensors 1 gezeigt. Dabei ist auf der x-Achse im Bereich zwischen 2,5 und 5 mm deutlich das Höhenprofil einiger Zinken 6.1, 6.2 zu sehen. Die Zinken 6.1, 6.2 haben in diesem Beispiel jeweils eine Halbwertsbreite von ca. 100 µm und eine Höhe von ca. 30 µm.

### Bezugszeichenliste

- 1: Feuchtesensor
- 2: Oberfläche
- 3: Substrat
- 4.1: Elektrode
- 4.2: Elektrode
- 5: hygroskopisches Material
- 6.1: Zinke
- 6.2: Zinke
- 7: Messbereich
- 8: Schichtdicke
- 10: Kennlinien
- 11: Kennlinien
- 12: Kennlinien
- 13: Kennlinien
- 14: Einschwingen
- 15: Endmesswert
- 16: Barriere
- 17: Goldkontakt
- 18: Höhenprofil
- S1-S8: herkömmlicher Feuchtesensor
- S9-S15: erfindungsgemäßer Feuchtesensor
- 101-104: Verfahrensschritte

## Patentansprüche

1. Feuchtesensor (1), geeignet zum Messen einer Luftfeuchte, umfassend:
mindestens ein nichtleitendes flächig ausgebildetes Substrat (3),
mindestens zwei an einer flächigen Seite des Substrats (3) angeordnete voneinander beabstandete Elektroden (4.1, 4.2),
ein flächig auf der flächigen Seite des nichtleitenden Substrats (3) und den Elektroden (4.1, 4.2) aufgetragenes die Elektroden (4.1, 4.2) verbindendes hygroskopisches Material (5),
**dadurch gekennzeichnet, dass**
dem hygroskopischen Material (5) mindestens ein die Viskosität erhöhender Feststoff beigemischt ist.

2. Feuchtesensor (1) nach Anspruch 1, wobei der mindestens eine beigemischte Feststoff Nanopartikel aufweist.

3. Feuchtesensor, nach Anspruch 2, wobei die Nanopartikel SiO₂-Nanopartikel sind.

4. Feuchtesensor (1) nach einem der vorangegangenen Ansprüche, wobei eine Stoffmenge des mindestens einen beigemischten Feststoffs derart bemessen ist, dass die Viskosität des hygroskopischen Materials (5) Gelcharakter aufweist.

5. Feuchtesensor (1) nach einem der vorangegangenen Ansprüche, wobei der mindestens eine beigemischte Feststoff derart ausgebildet oder ausgewählt ist, dass das hygroskopische Material (5) thixotrope Eigenschaften aufweist.

6. Feuchtesensor (1) nach einem der vorangegangenen Ansprüche, wobei einer der beigemischten Feststoffe ein weiteres Oxid aufweist.

7. Feuchtesensor (1) nach Anspruch 6, wobei das weitere Oxid ein Zinnoxid ist.

8. Feuchtesensor (1) nach einem der vorangegangen Ansprüche, wobei die zwei voneinander beabstandeten Elektroden (4.1, 4.2) jeweils kammartig ausgebildet sind, wobei die zwei kammartigen voneinander beabstandeten Elektroden (4.1, 4.2) derart angeordnet und gegeneinander verschoben sind, dass einzelne Zinken (6) beider Elektroden (4.1, 4.2) jeweils komplementär ineinander greifen.

9. Feuchtesensor (1) nach einem der vorangegangen Ansprüche, wobei das hygroskopische Material (5) ein hydrophiler Elektrolyt ist.

10. Feuchtesensor (1) nach Anspruch 9, wobei der hydrophile Elektrolyt eine Säure aufweist.

11. Feuchtesensor (1) nach Anspruch 10, wobei die Säure im hydrophilen Elektrolyt Phosphorsäure ist.

12. Feuchtesensor (1) nach einem der vorangegangenen Ansprüche, wobei das Substrat (3) aus Al₂O₃ besteht.

13. Verfahren zum Herstellen eines Feuchtesensors (1), umfassend die folgenden Schritte:
Bereitstellen eines nichtleitenden flächig ausgebildeten Substrats (3),
Aufbringen von zwei voneinander beabstandeten Elektroden (4.1, 4.2) auf einer flächigen Seite (2) des Substrats (3),
flächiges Aufbringen eines hygroskopischen Materials (5) auf die flächige Seite (2) des nichtleitenden Substrats (3) und die Elektroden (4.1, 4.2),
**dadurch gekennzeichnet, dass**
dem hygroskopischen Material (5) mindestens ein Feststoff zum Ändern einer Viskosität des hygroskopischen Materials (5) beigemischt wird.

14. Verfahren nach Anspruch 13, wobei der mindestens eine beigemischte Feststoff SiO₂-Nanopartikel aufweist, wobei eine Stoffmenge der SiO₂-Nanopartikel derart bemessen wird, dass die Viskosität des hygroskopischen Materials (5) Gelcharakter aufweist.

15. Verfahren nach Anspruch 13 oder 14, wobei das hygroskopische Material (5) mit dem mindestens einen beigemischten Feststoff mit Hilfe eines speziellen Pinsels auf das Substrat und die Elektroden flächig aufgebracht wird.

## Claims

1. Humidity sensor (1) suitable for measuring an air humidity, comprising:
at least one non-conductive, areal substrate (3),
at least two electrodes (4.1, 4.2) which are arranged on an areal side of the substrate (3) and are spaced apart from one another,
a hygroscopic material (5) which is areally applied on the areal side of the non-conductive substrate (3) and on the electrodes (4.1, 4.2) and connects the electrodes (4.1, 4.2),
**characterized in that**
at least one viscosity-increasing solid material is admixed with the hygroscopic material (5).

2. Humidity sensor (1) according to Claim 1, wherein the at least one admixed solid material includes nanoparticles.

3. Humidity sensor according to Claim 2, wherein the nanoparticles are SiO₂ nanoparticles.

4. Humidity sensor (1) according to any of the preceding claims, wherein an amount of substance of the at least one admixed solid material is proportioned in such a manner that the viscosity of the hygroscopic material (5) exhibits a gel character.

5. Humidity sensor (1) according to any of the preceding claims, wherein the at least one admixed solid material is formed or selected in such a manner that the hygroscopic material (5) exhibits thixotropic properties.

6. Humidity sensor (1) according to any of the preceding claims, wherein one of the admixed solid materials includes a further oxide.

7. Humidity sensor (1) according to Claim 6, wherein the further oxide is a tin oxide.

8. Humidity sensor (1) according to any of the preceding claims, wherein the two spaced-apart electrodes (4.1, 4.2) are each of comb-type design, wherein the two spaced-apart, comb-type electrodes (4.1, 4.2) are arranged and offset with respect to one another in such a manner that individual teeth (6) of both electrodes (4.1, 4.2) engage in one another in a complementary fashion.

9. Humidity sensor (1) according to any of the preceding claims, wherein the hygroscopic material (5) is a hydrophilic electrolyte.

10. Humidity sensor (1) according to Claim 9, wherein the hydrophilic electrolyte includes an acid.

11. Humidity sensor (1) according to Claim 10, wherein the acid in the hydrophilic electrolyte is phosphoric acid.

12. Humidity sensor (1) according to any of the preceding claims, wherein the substrate (3) consists of Al₂O₃.

13. Method for producing a humidity sensor (1), comprising the following steps:
providing a non-conductive, areal substrate (3),
applying two spaced-apart electrodes (4.1, 4.2) on an areal side (2) of the substrate (3),
areally applying a hygroscopic material (5) to the areal side (2) of the non-conductive substrate (3) and to the electrodes (4.1, 4.2),
**characterized in that**
at least one solid material is admixed with the hygroscopic material (5) in order to modify the viscosity of the hygroscopic material (5).

14. Method according to Claim 13, wherein the at least one admixed solid material includes SiO₂ nanoparticles, wherein an amount of substance of the SiO₂ nanoparticles is proportioned in such a manner that the viscosity of the hygroscopic material (5) exhibits a gel character.

15. Method according to Claim 13 or 14, wherein the hygroscopic material (5) with the at least one admixed solid material is applied areally to the substrate and the electrodes with the aid of a special brush.

## Revendications

1. Capteur d'humidité (1), approprié pour mesurer une humidité d'air, comprenant :
au moins un substrat non conducteur configuré sous forme plane (3),
au moins deux électrodes espacées l'une de l'autre (4.1, 4.2), agencées sur un côté plan du substrat (3),
un matériau hygroscopique (5) reliant les électrodes (4.1, 4.2), appliqué à plat sur le côté plan du substrat non conducteur (3) et les électrodes (4.1, 4.2),
**caractérisé en ce que**
au moins un solide augmentant la viscosité est ajouté au matériau hygroscopique (5).

2. Capteur d'humidité (1) selon la revendication 1, dans lequel ledit au moins un solide ajouté comprend des nanoparticules.

3. Capteur d'humidité selon la revendication 2, dans lequel les nanoparticules sont des nanoparticules de SiO₂.

4. Capteur d'humidité (1) selon l'une quelconque des revendications précédentes, dans lequel une quantité de matière dudit au moins un solide ajouté est calculée de telle sorte que la viscosité du matériau hygroscopique (5) présente un caractère de gel.

5. Capteur d'humidité (1) selon l'une quelconque des revendications précédentes, dans lequel ledit au moins un solide ajouté est configuré ou choisi de telle sorte que le matériau hygroscopique (5) présente des propriétés thixotropiques.

6. Capteur d'humidité (1) selon l'une quelconque des revendications précédentes, dans lequel un des solides ajoutés comprend un oxyde supplémentaire.

7. Capteur d'humidité (1) selon la revendication 6, dans lequel l'oxyde supplémentaire est un oxyde d'étain.

8. Capteur d'humidité (1) selon l'une quelconque des revendications précédentes, dans lequel les deux électrodes espacées l'une de l'autre (4.1, 4.2) sont chacune configurées en forme de peigne, les deux électrodes espacées l'une de l'autre en forme de peigne (4.1, 4.2) étant agencées et décalées l'une par rapport à l'autre de telle sorte que des dents individuelles (6) des deux électrodes (4.1, 4.2) s'engrènent respectivement de manière complémentaire.

9. Capteur d'humidité (1) selon l'une quelconque des revendications précédentes, dans lequel le matériau hygroscopique (5) est un électrolyte hydrophile.

10. Capteur d'humidité (1) selon la revendication 9, dans lequel l'électrolyte hydrophile comprend un acide.

11. Capteur d'humidité (1) selon la revendication 10, dans lequel l'acide dans l'électrolyte hydrophile est l'acide phosphorique.

12. Capteur d'humidité (1) selon l'une quelconque des revendications précédentes, dans lequel le substrat (3) est constitué d'Al₂O₃.

13. Procédé de fabrication d'un capteur d'humidité (1), comprenant les étapes suivantes :
la fourniture d'un substrat non conducteur configuré sous forme plane (3),
l'application de deux électrodes espacées l'une de l'autre (4.1, 4.2) sur un côté plan (2) du substrat (3),
l'application à plat d'un matériau hygroscopique (5) sur le côté plan (2) du substrat non conducteur (3) et les électrodes (4.1, 4.2),
**caractérisé en ce que**
au moins un solide pour la modification d'une viscosité du matériau hygroscopique (5) est ajouté au matériau hygroscopique (5).

14. Procédé selon la revendication 13, dans lequel ledit au moins un solide ajouté comprend des nanoparticules de SiO₂, une quantité de matière des nanoparticules de SiO₂ étant calculée de telle sorte que la viscosité du matériau hygroscopique (5) présente un caractère de gel.

15. Procédé selon la revendication 13 ou 14, dans lequel le matériau hygroscopique (5) avec ledit au moins un solide ajouté est appliqué à plat sur le substrat et les électrodes à l'aide d'un pinceau spécial.
